# EUROPEAN PATENT SPECIFICATION

(11) **EP 1 793 223 B1**
(45) Date of publication and mention of the grant of the patent: **11.07.2012**
(21) Application number: 06256101.4
(22) Date of filing: 29.11.2006
(51) Int. Cl.: G01N 27/407

(54) **Gas sensor**
Gassensor
Capteur de gaz

(30) Priority: 01.12.2005 JP 2005348536
(43) Date of publication of application: 06.06.2007
(73) Proprietor: NGK Spark Plug Co., Ltd., Nagoya Aichi (JP)
(72) Inventor: Hirasawa, Makoto, Nagoya, Aichi (JP); Miyata, Daisuke, Nagoya, Aichi (JP); Matsubara, Yohiaki, Nagoya, Aichi (JP); Kawauchi, Keiji, Nagoya, Aichi (JP)
(74) Representative: Tyson, Robin Edward

(56) References cited:
- EP-A2- 1 106 999
- US-A- 5 900 129
- US-A1- 2003 136 675
- US-A1- 2005 155 207

## Description

The invention relates to a gas sensor for detecting the concentration of a gas to be measured.

Conventionally, an oxygen sensor, known as a gas sensor, is provided in an exhaust system of an internal-combustion engine for detecting the concentration of oxygen in exhaust gas so as to control combustion of the internal-combustion engine. The oxygen sensor typically has a structure in which a vent hole for introducing outside air, used as the reference gas, is formed at the center of a sealing member provided at an upper part of the oxygen sensor and an air-permeable and water-repellent filter is provided so as to close the vent hole (JP-A-2001-208724). Specifically, the oxygen sensor has a water-repellent filter in the shape of a sheet, which is fixed in the vent hole so as to be held between the outer circumferential surface of a tubular insertion member capable of fitting into the vent hole and the inner circumferential surface of the vent hole.

In such an oxygen sensor, however, the water-repellent sheet-shaped filter is likely to be torn due to a shock from the outside since the filter is exposed to the outside. In regard to the above, an oxygen sensor has been proposed in which a column-shaped filter is provided in a vent hole passing through the center of a sealing member (JP-A-H9-54063). The oxygen sensor thus has a structure in which the filter is not easily torn even if it receives a shock from the outside.

In such an oxygen sensor disclosed in JP-A-H9-54063, however, a part of the filter may be extremely deformed, and thereby, deteriorated in air-permeability in some cases. Specifically, a sealing member covering the circumferential surface of the filter is fixed by crimping with a casing provided outside in JP-A-H9-54063. The part of the sealing member which is fixed by crimping is thus compressed inwardly. Accordingly, this part of the sealing member is deformed toward the inside, so that a part of the filter provided inside the sealing member is compressed inwardly. This causes the part of the filter to be extremely deformed, and thereby, the air permeability of the filter is deteriorated, so that detection accuracy of a gas sensor deteriorates.

US 5,900,129 discloses a gas sensor comprising a sensor element within a casing, a sealing member having a through hole, and a column-shaped filter inserted in the through ho le.

EP 1 106 999, an earlier application of the present applicant, discloses a gas sensor including a filter inserted in a through hole through a seal member. A tubular member is provided between the inner surface of the through hole and the filter. However, the filter is not a column-shaped filter but a cup-shaped filter and is sandwiched between the tubular member and the sealing member.

US 2003/0136675, an earlier application of the present applicant, discloses a gas sensor including a filter and a cup-shaped tubular member bonded to each other by an adhesive layer.

The present invention has been accomplished in view of the above problems, and it is therefore an object of the invention to provide a gas sensor in which a column-shaped filter is provided in a sealing member fixed to the casing by crimping, which prevents extreme deformation of the filter due to crimping of the casing and so prevents deterioration of accuracy in detection of the gas.

According to the present invention there is provided a gas sensor comprising:
a sensor element extending in an axial direction of the gas sensor for detecting a gas to be measured;
a casing surrounding the sensor element and having a front end portion, from which a front portion of the sensor element projects so as to be exposed to the gas to be measured;
a sealing member fixedly provided in a rear portion of the casing, the sealing member having a through hole penetrating through the sealing member in the axial direction; and
a column-shaped filter inserted in the through hole, which has air permeability and a water-repellency;
the gas sensor being characterised in comprising:
   a tubular member provided which is less likely to deform compared to the sealing member, between the inner surface of the through hole and the filter,
      wherein the filter is fixed to the tubular member so that no water is permeated in a space between the outer circumferential surface of the filter and the inner circumferential surface of the tubular member, and
   a separator, provided with a cross-shaped groove on a rear end surface of the separator and with insertion holes communicating with the cross-shaped groove, the insertion holes passing through from a front end to a rear end of the separator,
   wherein the separator is positioned inside the casing and contacts a front end surface of the filter and a front end surface of the sealing member to enable the filter and tubular member to be fixed in the sealing member, and
   wherein the separator allows air introduced through the filter to pass through the cross-shaped groove to be led to the insertion holes.

As described above, since a tubular member, which is more difficult to deform than the sealing member and protecting the filter from deformation, is provided between the through hole and the filter, the tubular member absorbs compression force from the sealing member and prevents the filter provided inside the tubular member from being extremely deformed when the sealing member is fixed by crimping with the casing. This prevents the air permeability of the filter from lowering, so that deterioration of the gas sensor detection accuracy can be prevented.

It goes without saying that the filter can be any form as long as it is in the shape of a column. Concretely, the filter may be a polygonal prism such as a triangular prism and a quadrilateral prism or a cylinder. Further, the filter is not necessarily the same length in the axial direction as the tubular member, and may be shorter or longer than the tubular member. Moreover, the filter is not necessarily formed from one member. There may be plural pillar members stacked in the axial direction or a bundle of plural fiber members may be lined up parallel in the axial direction inside the tubular member, for example. In the latter case, the fiber members themselves may have air permeability, or spaces between the respective fiber members may provide the air permeability if the fiber members do not have air permeability.

In addition, the tubular member can be formed from any material as long as it is more difficult to deform than the sealing member. The tubular member may be made of metal, ceramic, or resin, for example. Further, the tubular member is not necessarily same as the through hole in length in the axial direction and may fit inside a part of the through hole. Moreover, the tubular member does not necessarily cover the whole circumferential surface of the filter but may be a member provided with a slit or a hole in a part of its circumferential surface. It goes without saying, however, that the filter is deformed when there is deformation of the sealing member.

On the inner surface of the through hole, the outer circumferential surface of the tubular member, the inner circumferential surface of the tubular member or the outer circumferential surface of the filter, a brim portion in a shape such as a rib may be formed. The brim portion may be in the shape of a triangle or a square in section. It goes without saying, however, that water is not permeable from the space between the outer circumferential surface of the tubular member and the inner circumferential surface of the through hole or between the outer circumferential surface of the filter and the inner circumferential surface of the tubular member.

Further, in the gas sensor in accordance with the invention, the tubular member preferably keeps the filter in its column shape. This is because the tubular member is more difficult to deform than the filter and the sealing member. This allows the tubular member to better absorb compression force of the sealing member and prevent deformation of the filter provided inside the tubular member when the sealing member is fixed by crimping with the casing and the part of the sealing member fixed by crimping is compressed and deformed inward. This prevents the filter air permeability from lowering, so that deterioration of the gas sensor detection accuracy can be prevented. Keeping the shape of the filter in its column shape by means of the tubular member means that even when the tubular member provided in the gas sensor is detached, there is no difference in the shape of the filter before and after detaching the tubular member.

Moreover, in the gas sensor in accordance with the invention, the filter is preferably provided so as to be press-fitted in the tubular member. This allows the filter to be firmly fixed to the tubular member. Such a press-fitting in the tubular member can be accomplished by inserting a filter, which has an outer diameter larger than the inner diameter of the tubular member before the filter is inserted into the tubular member, or by inserting a filter, which has an outer diameter smaller than the inner diameter of the tubular member and swaging the tubular member so as to reduce the inner diameter of the tubular member.

In addition, in the gas sensor in accordance with the invention, at least a part of the filter is preferably provided in the tubular member with an adhesive layer between them. In this way the filter can be firmly fixed to the tubular member without deteriorating its air permeability. The adhesive layer may be formed on the whole outer circumferential surface of the filter or on a part of the outer circumferential surface.

Furthermore, in the gas sensor in accordance with the invention, at least a part of the filter is preferably fixed by crimping with the tubular member. Fixing at least a part of the tubular member to the filter by crimping as described above allows the filter to be stably fixed to the tubular member. It goes without saying that the amount of crimping is such that air permeability of the filter is not lowered.

Additionally, in the gas sensor in accordance with the invention, the tubular member is preferably a metal cup including a bottom portion on a rear end side and an air vent in the bottom portion. Using a metal cup with such a bottom portion as the tubular member allows the bottom portion to reduce a shock from the outside or the like applied to the filter. A structure in which the filter is in contact with the bottom portion further facilitates positioning when inserting the filter into the tubular member.

The gas sensor in accordance with the invention preferably also comprises: lead wires inserted into the sealing member; terminal leads for electrically connecting the sensor element and the lead wires respectively; and the separator, which is disposed in the casing, holds the terminal leads therein so that the terminal leads are insulated from each other, wherein the rear end of the separator is in contact with the front end surface of the filter. Because the rear end of the separator is in contact with the front end surface of the column-shaped filter, misalignment of the column-shaped filter is prevented. It is preferable that the rear end of the separator contacts a front end surface of the sealing member as well as the front end surface of the filter.

Preferably, the front end face of the filter is protruding from the front end of the tubular member. By this configuration, the filter can be easily in contact with the rear end of the separator.

Moreover, providing a convex portion at the rear end of the separator which is in contact with the front end surface of the filter causes the column-shaped filter to be more surely fixed.

Preferred embodiments of the present invention will next be described, by way of example only, with reference to the drawings. However, the present invention should not be construed as being limited thereto.

### BRIEF DESCRIPTION OF THE DRAWINGS

Fig. 1 is a sectional view of a gas sensor 1 in accordance with the first embodiment.

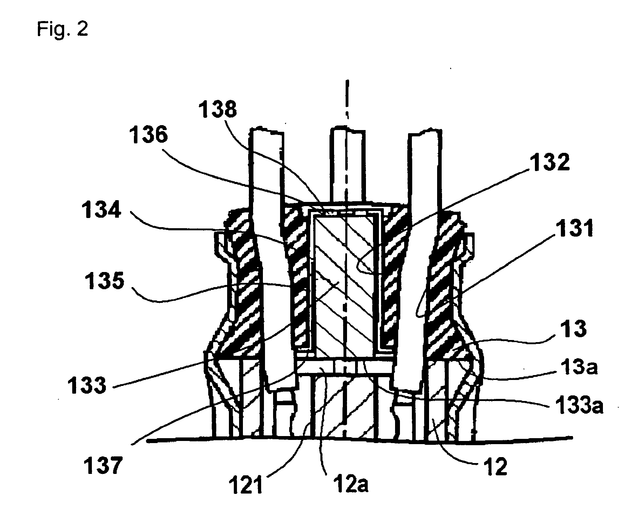

Fig. 2 is an enlarged sectional view of the vicinity of a sealing member 13 provided in a gas sensor 1 in accordance with the first embodiment.

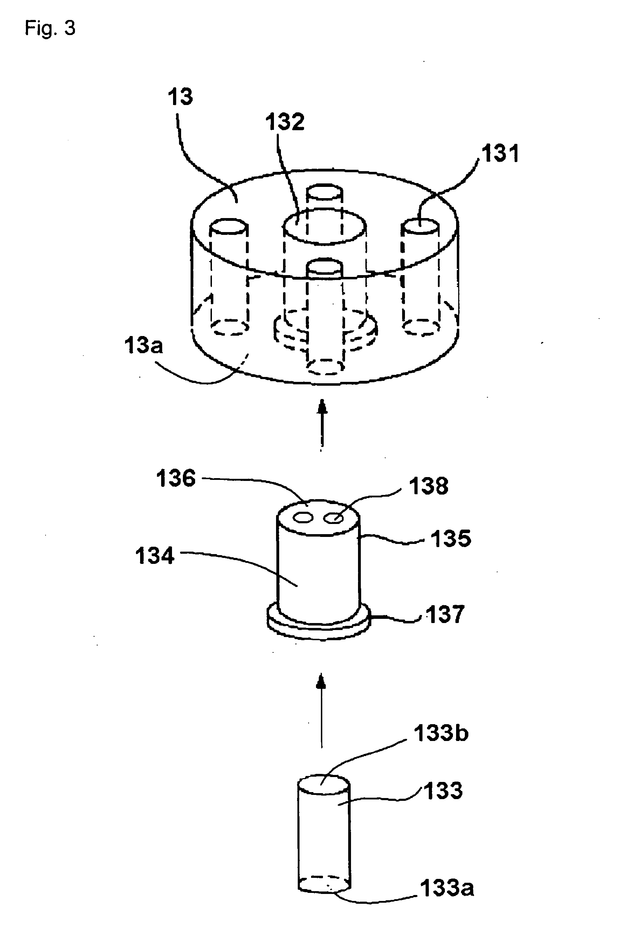

Fig. 3 illustrates a manufacturing process of a filter 133, a metal cup 134 and a sealing member 13 in accordance with the first embodiment.
Fig. 4 is an enlarged sectional view of the vicinity of a sealing member 13 provided in a gas sensor 1 in accordance with the second embodiment.
Fig. 5 is an enlarged sectional view of a part showing a convex portion 12b provided at the rear end of the separator 12 in accordance with the third embodiment.
Fig. 6 is an enlarged sectional view of the vicinity of a sealing member 13 in a gas sensor 1 in accordance with the fourth embodiment in which an adhesive layer 150 is formed.
Fig. 7 is a perspective sectional view of a filter and a metal cup 134 for a gas sensor 1 in accordance with the fifth embodiment, the filter comprising fiber members.
Fig. 8 is an enlarged sectional view of the vicinity of a sealing member 13 in a gas sensor 1 not embodying the present invention.

### Description of the Reference Numerals and Signs

1: gas sensor
2: sensor element
4: main metal fitting
11: outer tube member
12: separator
12b: convex portion
14: terminal lead
13: sealing member
132: air introduction hole
133: filter
133a: front end surface of filter
134: metal cup
135: circumferential portion
136: bottom portion
138: air vent
150: adhesive layer
190, 200, 210, 220: lead wires

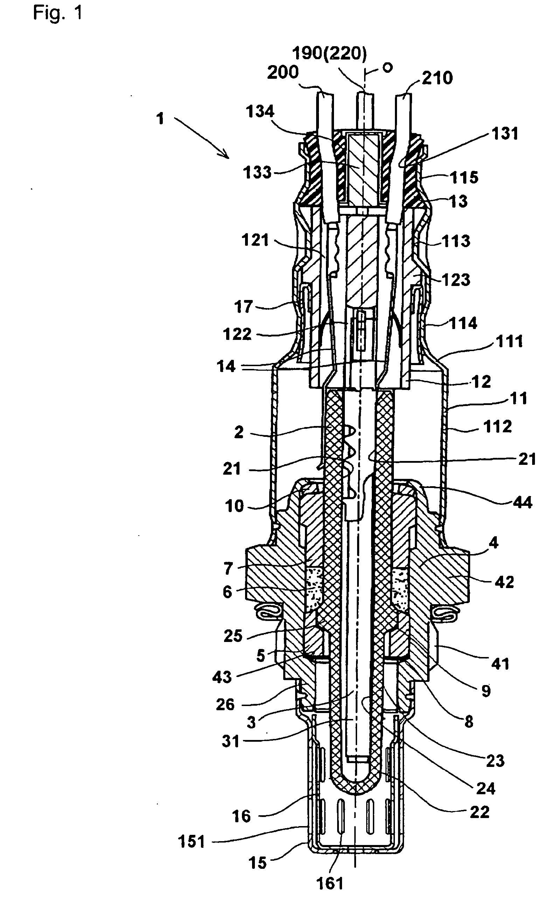

A gas sensor (an oxygen sensor) is preferably mounted to an exhaust pipe of an automobile for detecting the concentration of oxygen in exhaust gas. Fig. 1 is a sectional view showing the whole structure of a gas sensor 1 in accordance with a first embodiment.

As shown in Fig. 1, the gas sensor 1 comprises a sensor element 2 in the shape of a cylindrical tube with one end closed so as to form a chamber 21 therein, a ceramic heater 3 inserted into the chamber 21 of the sensor element 2 and main metal fitting 4 holding the sensor element therein. In the embodiment, the end to be exposed to the exhaust gas (the closed side of the sensor element 2, the lower side in Fig. 1) in the direction along an axis of the sensor element 2 shown in Fig. 1 is referred to as "the front side" while the opposite side (the upper side in Fig. 1) is referred to as "the rear side" for the purpose of description.

The sensor element 2 comprises a solid electrolytic body with oxygen ion conductivity, and includes partially stabilized zirconia as the main component, with yttria made into a solid solution as a stabilizing agent. The sensor element 2 is provided with a detecting portion 22 at its front end. The detecting portion 22 has a porous internal electrode layer 24 covering almost all of an inner surface of the chamber 21, formed from Pt or Pt alloy, and a porous external electrode layer 23 on the outer surface of the detecting portion 22. Further, at approximately the middle point of the sensor element 2 in an axial direction, an engaging flange portion 25 projecting outward in the radial direction is provided. On the other hand, the ceramic heater 3 is formed into the shape of a pole and includes a heat generating part 31 with a resistance heater pattern inside. Applying electricity to the resistance heater pattern through later-mentioned heater lead wires 190 and 220 causes the heat generating part 31 to generate heat. This allows the ceramic heater 3 to heat the sensor element 2 for activation.

The main metal fitting 4 includes a screw part 41 by which the gas sensor 1 fits in a mounting hole of the exhaust pipe and a tool engaging portion 42 around which a fitting tool engages to screw main metal fitting 4 into the mounting hole of the exhaust pipe. A step portion 43 projecting inward in the radial direction is provided at the front side of the inner circumferential surface of the main metal fitting 4. A holding member 5 is engaged with the step portion 43 with a gasket 8 inserted between them. Further, an engaging flange portion 25 of the sensor element 2 is supported by the holding member 5 via a gasket 9 between them, so that sensor element 2 is held on the main metal fitting 4. A filler member 6 is provided between the inner surface of the main metal fitting 4 and the outer surface of the sensor element 2 at the rear end of the holding member 5. Further, at the rear end of the filler member 6, a sleeve 7 and an annular ring 10 are coaxially inserted in this order. Crimping the rear end portion 44 of the main metal fitting 4 inwardly and forwardly so that the sensor element 2 is fixed in the main metal fitting 4. In the gas sensor 1, the filler member 6 is compressedly packed in via the sleeve 7 by the crimping rear end portion 44 of the main metal fitting 4. This allows the sensor element 2 to be held airtight inside the tubular main metal fitting 4.

On the other hand, on the front end 26 of the main metal fitting 4 is connected an outer cover 15. The outer cover 15 is a cylindrical tube with a bottom, which covers the detecting portion 22 of the sensor element 2 projecting from the main metal fitting 4. Further, inside the outer cover 15 is provided an inner cover 16. Like the outer cover 15, the inner cover 16 is also a cylindrical tube with a bottom, covering the detecting portion 22 of the sensor element 2. The outer cover 15 and the inner cover 16 are provided with vent holes 151 and 161 for introducing exhaust gas into the outer and inner covers 15, 16.

Furthermore, an outer tube member 11 is connected with the main metal fitting 4. The outer tube member 11 includes front portion 112 connected with the main metal fitting, a rear portion 113, and a shoulder portion 111 formed between the front portion 112 and the rear portion 113. The shoulder portion 111 is located at approximately the middle of the outer tube member 11 in the axial direction. The rear portion 113 includes a first crimping portion 114 for holding a holding member 17 and a second crimping portion 115 for airtightly fixing a sealing member 13. An assembly of the main metal fitting 4 and the outer tube member 11 in the embodiment correspond to the "casing" in the Claims.

A separator 12 is arranged inside the rear portion 113 of the outer tube member 11 with the holding member 17 between them so that a insertion hole 121 for inserting sensor lead wires 200 and 210 and heater lead wires 190 and 220 can pass through from the front end to the rear end. Further, in the separator 12, in the axial direction is formed a holding hole 122 with its opening at the front end and a bottom at the rear end. The rear part of the ceramic heater 3 is inserted into the holding hole 122. Contact of the rear end surface of the ceramic heater 3 with the bottom surface of the holding hole 122 allows the ceramic heater 3 to be aligned with the axis of the separator 12. The separator 12 includes a separator flange portion 123 extending outward from the circumference.

The four lead wires 190, 200, 210 and 220 are connected to an external connector not shown in the drawings. Through the external connector, electric signals are inputted and outputted between external devices such as an ECU and the respective lead wires 190, 200, 210 and 220.

The respective lead wires 190, 200, 210 and 220 have a structure in which a conductive wire or a bundle of conductive wires is covered with an insulating film made of resin and the rear end of the conductive wire is connected to a connector terminal provided on the external connector, details thereof not shown in the drawings. The front end of the conductive wire of the sensor lead wire 200 is crimped by the rear end of terminal lead 14 whose front portion is fixedly surrounding the outer surface of the sensor element 2, while the front end of the conductive wire of the sensor lead wire 210 is crimped by the rear end side of terminal lead 14 whose front portion is press-fitted on the inner surface of the sensor element 2. Thus, the sensor lead wire 200 is electrically connected to the external electrode layer 23 of the sensor element 2 and the sensor lead wire 210 is electrically connected to the internal electrode layer 24. On the other hand, front portions of the conductive wires of the heater lead wires 190 and 220 are respectively connected to a pair of heater terminal leads connected to the resistance heater pattern of the ceramic heater 3.

Now, the sealing member 13, which is the main part of the invention, will be described in detail.

The sealing member 13 includes the four insertion holes 131 for inserting the two sensor lead wires 200, 210 and the two heater lead wires 190 and 220 and a through hole 132 at the approximate center. The sealing member 13 is formed from fluoride rubber or the like.

Inside the through hole 132 is provided a solid column-shaped filter 133. The filter 133 is formed from a material such as PTFE, for example, and is air-permeable and water-repellent. As described above, the filter is formed into the shape of cylinder, so that even though the filter 133 is exposed to the outside, it is not torn in the case of a shock from the outside or the like.

Further, a metal cup 134 is provided between the through hole 132 of the sealing member 13 and the filter 133. The metal cup 134 is made of austenitic stainless steel or the like such as SUS 304L. The metal cup 134 includes a circumferential portion 135 extending along an axis O of the gas sensor 1, a bottom portion 136 formed on the rear end of the circumferential portion 135, and a brim portion 137 projecting in the radial direction from the front end of the circumferential portion 135. Air vents 138 are formed in the bottom portion 136 such that the ambient air can be introduced into the inner chamber of the sensor element 2 through the air vents 138 and the filter 133. The metal cup 134 in the embodiment corresponds to the "tubular member" in the Claims.

As described above, providing the metal cup 134, which is more difficult to deform than the sealing member 13, between the through hole 132 and the filter 133, the metal cup 134 protect the filter from the compression force generated when the sealing member is crimped at the second crimping portion 115. Thus, air permeability of the filter 133 is not deteriorated by the crimping so that the detection accuracy of the gas sensor 1 is maintained.

Furthermore, the filter 133 is moderately press-fitted in the metal cup 134. This allows the filter 133 to be firmly fixed to the metal cup 134.

Moreover, the metal cup 134 includes the bottom portion 136 which covers the rear end surface 133b of the filter 133. Accordingly, the metal filter 133 can be protected against high pressure water, a stone, and an insect like an ant. And the brim portion 137 prevent the metal cup 134 from falling out of the sealing member.

In addition, since the rear end face 133b of the filter 133 contacts the inner surface of the bottom portion 136, the filter 133 can be accurately positioned in the metal cup 134.

On the other hand, a front end surface 133a of the filter 133 protrudes from the front end (brim portion 137) of the metal cup 134, and abuts on the rear end portion of the separator 12. Such arrangement prevents the filter 133 from falling out of the metal cup 134.

On the rear end surface of the separator 12 is provided a cross-shaped groove 12a, which communicates with the insertion holes 121. Accordingly, the air introduced through the filter 133 passes through the cross-shaped groove 12a to be led to the respective insertion holes 121. On the other hand, a part of the rear end portion of the separator 12 where the cross-shaped groove 12a is not formed is in contact with the front end surface 133a of the filter 133 and the front end surface 13a of the sealing member 13. Thus, the filter 133 and the metal cup 134 can be fixed in the sealing member 13.

Now, a method of manufacturing the gas sensor 1 in accordance with the embodiment will be described in detail.

First, 5 mol% of yttria was added to zirconia for granulation, and a tube whose top end was open and which had a bottom was made. Sintering was then performed at 1400 to 1600 °C in an electric furnace to obtain a solid electrolytic body. Second, the external electrode layer 23 made of platinum was provided on the outer circumferential surface of the solid electrolytic body by vapor deposition, chemical plating or the like. Further, the internal electrode layer 24 was similarly provided on the inner side surface of the solid electrolytic body by vapor deposition, chemical plating or the like, thus completing the sensor element 2.

Then, the inner cover 16 was inserted in the front end part 26 of the outer cover 15 and then the main metal fitting 4 was inserted in the outer cover 15 and bonded with the outer cover 15 by laser welding. The gasket 8, the holding member 5, the gasket 9, the sensor element 2, the filler member 6 and the sleeve 7 were inserted into the main metal fitting 4 in this order, and the rear end portion 44 of the main metal fitting 4 was crimped.

On the other hand, the terminal leads 14 and 14 were connected with the sensor lead wires 200 and 210. The heater terminal leads of the ceramic heater 3 were connected to the heater lead wires 190 and 220. The ceramic heater 3 was positioned inside the terminal leads 14 while the respective lead wires 190, 200, 210 and 220 were inserted into the respective insertion holes 121 of the separator 12.

The cylindrical filter 133 was then inserted into the metal cup 134 comprising the circumferential portion 135, the bottom portion 136 and the brim portion 137 until the rear end face 133b contacts the bottom portion 136. Press-fitting the filter 133 into the metal cup 134 as described above fixed the filter 133 firmly in the metal cup 134. Further, the metal cup 134 into which the filter 133 was inserted was press-fitted into the sealing member 13. An assembly of the sealing member 13, the filter 133 and the metal cup 134 was fixedly arranged at the rear portion of the outer tube member 11.

Next, the separator 12 was inserted in the outer tube member 11 so that the front end surface 13a of the sealing member 13 was in contact with the rear end surface of the separator 12 with the lead wires 190, 200, 210 and 220 each being inserted into one of the insertion holes 131 of the sealing member 13. The holding member 17 was inserted from the front end of the separator 12.

The outer tube member 11 was then fitted on the rear portion of the main metal fitting 4, and the part where the outer tube member 11 and the main metal fitting 4 overlap was crimped. Further, the outer tube member 11 was crimped to form the first crimping portion 11 so that the holding member 17 would be held 4. Moreover, the outer tube member 11 was crimped to form the second crimping portion 115 so that the elastic sealing member 13 would be held. Crimping was performed all along the circumference. The overlapping portions were bonded by laser welding. The gas sensor 1 was thus completed.

The first embodiment of the invention is described hereinbefore. The invention, however, is not limited to the first embodiment. The invention can be modified in design variously.

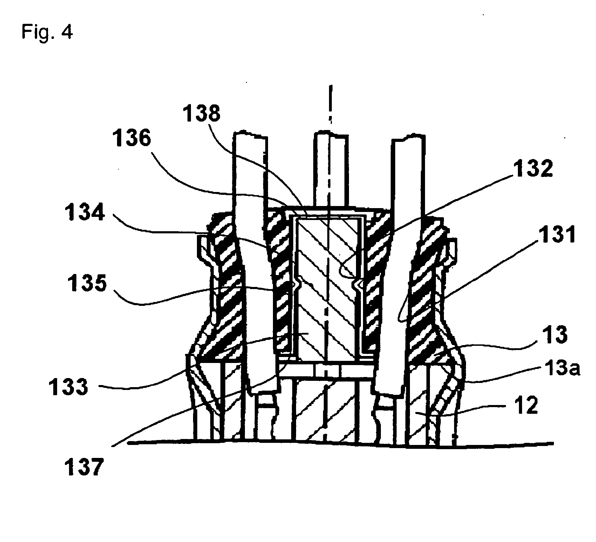

Fig. 4 shows a second embodiment, for example. The second embodiment is different from the first embodiment only in arrangement of the filter 133 with respect to the metal cup 134. Accordingly, chiefly this difference will be described and the other parts will not be described.

As shown in Fig. 4, a cylindrical filter 133 is provided inside a through hole 132 of a filter 13. Further, the metal cup 134 is provided between the through hole 132 of the sealing member 13 and the filter 133. The metal cup 134 comprises a circumferential portion 135 extending in the axial direction O, a bottom portion 136 formed at the rear end of the circumferential portion 135, and the projection part 137 projecting in the radial direction from the front end of the circumferential portion 135. The center portion of the circumferential portion 135 in the axial direction is crimped along its circumference to fix the filter 133. This allows the filter 133 to be stably fixed in the metal cup 134.

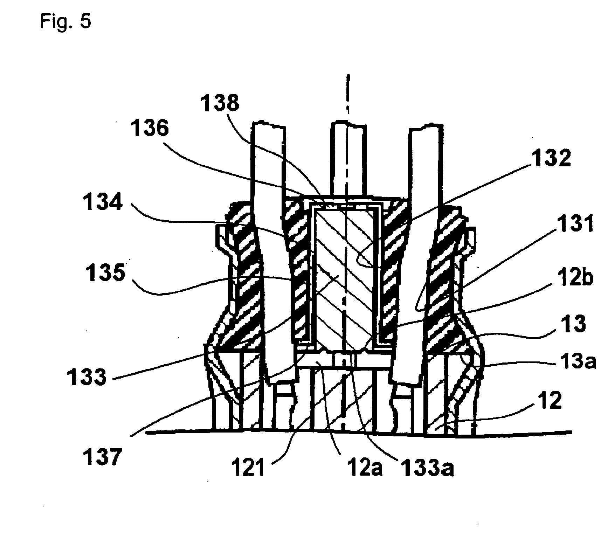

Moreover, Fig. 5 shows a third embodiment of the invention. wherein a plurality of convex portions 12b are formed on a part of the rear end of the separator 12 where the cross-shaped groove 12a is not formed. 5. The convex portion 12b is in contact with the front end surface 133a of the filter 133 to prevent the filter 133 from shifting to the front. Providing the convex portion 12b also causes the separator 12 to be reliably positioned.

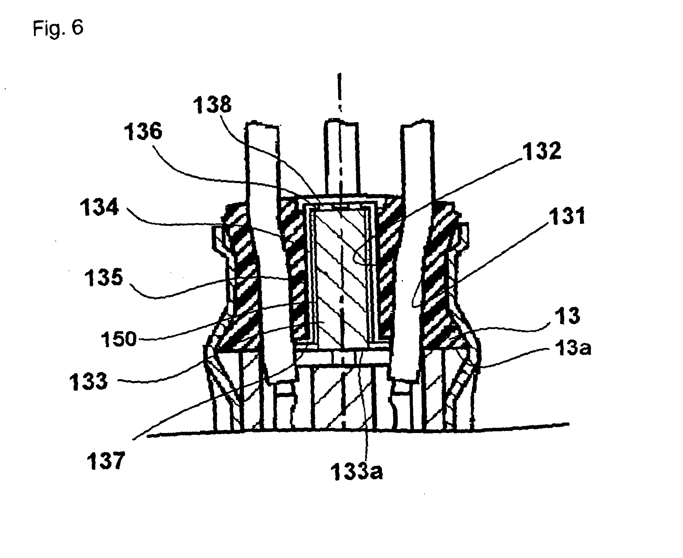

According to the above embodiments, the filter 133 is in direct contact with the circumferential portion 135 of the metal cup 134. The invention, however, is not limited to the above. Fig. 6 shows a fourth embodiment of the invention, wherein an adhesive layer 150 is provided between the metal cup 134 and the filter 133. The adhesive layer is formed from a heat-resistant adhesive. Providing the adhesive layer 150 between the metal cup 134 and the filter 133 as described above allows the filter 133 to be firmly fixed to the metal cup 134, without press-fitting. It goes without saying that the adhesive layer 150 should be provided so as to have no influence upon the filter 133 in air permeability and water-repellency. Furthermore, the adhesive layer 150 may be formed on only a part of the outer circumferential surface of the filter 133 although it is formed on a whole outer circumferential surface of the filter 133 in Fig. 6.

Moreover, the filter 133 may be provided in the metal cup 134 through an adhesive layer provided between the metal cup 134 and the filter 133 instead of the structure in the first embodiment in which the filter 133 is press-fitted into the metal cup 134 and the structure in the second embodiment in which the metal cup 134 is crimped to position the filter 133.

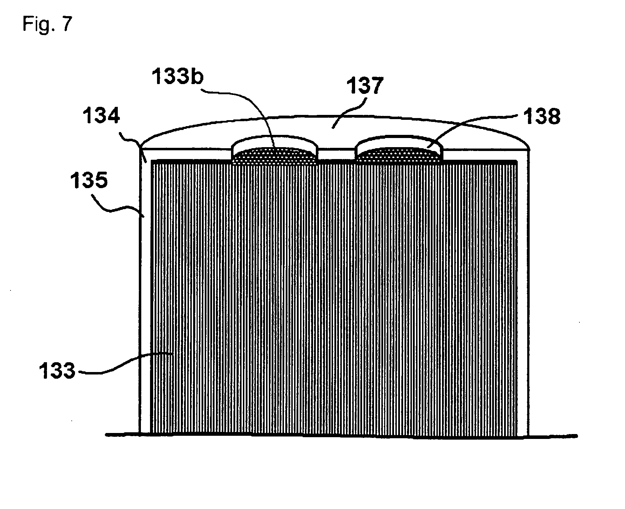

In addition, a cylindrical filter 133 is used in the first and second embodiments, but the invention is not limited to the above. It may be possible to use a filter in the shape of a polygonal prism. Fig. 7 shows a fifth embodiment of the invention, wherein a bundle of a plurality of fiber members are bunched in the metal cup 134 to form the filter. In this structure, a bundle of plurality of fiber members are inserted in the metal cup 134, and then, the inner diameter of the metal cup 134 is reduced in size by swaging the metal cup 134 to fix the plural fiber members in the metal cup 134. The fiber members of the filter have no air permeability. Spaces between the respective fiber members give the air permeability to the filter.

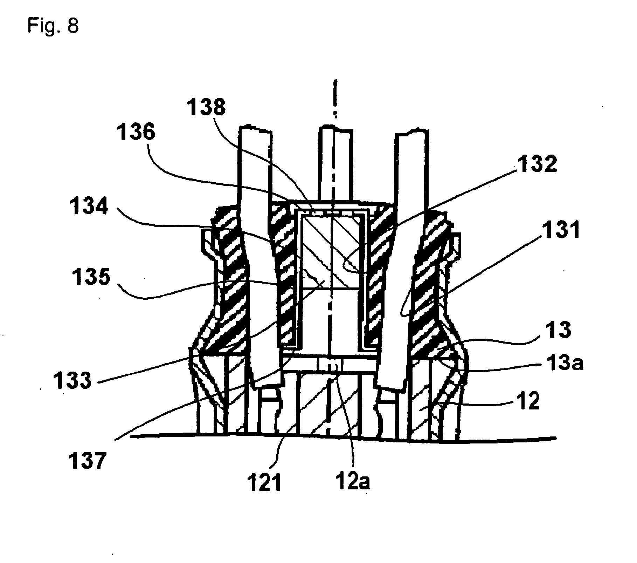

Furthermore, the filter 133 may have a larger axial length than the metal cup 134 in the above embodiments. Fig. 8 shows an embodiment outside the scope of the invention, wherein the filter 133 has a smaller axial length than the metal cup 134, and is arranged only in a part of the metal cup 134. It is also possible to provide the metal cup 134 in only a part of the through hole 132 (not shown).

Moreover, according to another embodiment outside the scope of the present invention, a protruding portion in a shape such as a rib may be formed on an inner circumferential surface of the through hole 132 in the first embodiment. The cross section of the protruding portion may be a triangle or a square. The protruding portion may be provided not only on the inner circumferential surface of the through hole 132 but also on the outer surface or the inner surface of the circumferential portion 135 of the metal cup 134, or the outer circumferential surface of the filter 133 similarly.

## Claims

1. A gas sensor comprising:
a sensor element (2) extending in an axial direction of the gas sensor for detecting a gas to be measured;
a casing (11) surrounding the sensor element (22) and having a front end portion (112), from which a front portion of the sensor element (22) projects so as to be exposed to the gas to be measured;
a sealing member (13) fixedly provided in a rear portion (113) of the casing (11), the sealing member (13) having a through hole (132) penetrating through the sealing member (13) in the axial direction; and
a column-shaped filter (133) inserted in the through hole (13), which has air permeability and a water-repellency;
the gas sensor being **characterised in** comprising:
a tubular member (134) which is less likely to deform compared to the sealing member (13), provided between the inner surface of the through hole (132) and the filter (133),
wherein the filter (133) is fixed to the tubular member (134) so that no water is permeated in a space between the outer circumferential surface of the filter (133) and the inner circumferential surface of the tubular member (134), and
a separator (12), provided with a cross-shaped groove (12a) on a rear end surface of the separator (12) and with insertion holes (121) communicating with the cross-shaped groove (12a), the insertion holes passing through from a front end to a rear end of the separator (12),
wherein the separator is positioned inside the casing (11) and contacts a front end surface (133a) of the filter (133) and a front end surface (13a) of the sealing member (13) to enable the filter (133) and tubular member (134) to be fixed in the sealing member (13), and
wherein the separator (12) allows air introduced through the filter (133) to pass through the cross-shaped groove (12a) to be led to the insertion holes (121).

2. The gas sensor according to Claim 1, wherein
the tubular member (134) keeps the filter (133) in its column shape.

3. The gas sensor according to Claim 1 or 2, wherein
the filter (133) is disposed by press-fitting in the tubular member (134).

4. The gas sensor according to any one of Claims 1 to 3, wherein at least a part of the filter is disposed in the tubular member (134) with an adhesive layer (150) between them.

5. The gas sensor according to any one of Claims 1 to 4, wherein at least a part of the filter (133) is fixed by crimping with the tubular member (134).

6. The gas sensor according to any one of Claims 1 to 5, wherein
the tubular member (134) is a metal cup including a bottom portion (136) on the rear end and an air vent (138) in the bottom portion (136).

7. The gas sensor according to any one of Claims 1 to 6, further comprising:
lead wires (190, 200, 210, 220) inserted into the sealing member (13);
terminal leads (14) for electrically connecting the sensor element (22) and the lead wires (190, 200, 210, 220) respectively; and
the separator (12) holding the terminal leads (14) therein so that the terminal leads (14) are insulated from each other.

8. The gas sensor according to Claim 7, wherein the front end face of the filter (133) is protruding from the front end of the tubular member (134).

9. The gas sensor according to Claim 7 or 8, wherein the rear end of the separator (12), which is in contact with the front end surface (133a) of the filter (133), has a convex portion (12b).

## Patentansprüche

1. Gassensor, umfassend:
ein Sensorelement (2), das sich in einer axialen Richtung des Gassensors zum Nachweisen eines zu messenden Gases erstreckt;
ein Gehäuse (11), welches das Sensorelement (22) umgibt und einen vorderen Endabschnitt (112) aufweist, von dem ein vorderer Teil des Sensorelements (22) vorsteht, um dem zu messenden Gas exponiert zu sein;
ein Dichtungselement (13), welches fest in einem hinteren Abschnitt (113) des Gehäuses (11) vorgesehen ist, wobei das Dichtungselement (13) ein das Dichtungselement (13) in der axialen Richtung durchsetzendes Durchgangsloch (132) aufweist; und
ein in das Durchgangsloch (13) eingesetztes, säulenförmiges Filter (133), weiches Luftdurchlässigkeit und Wasseraiaweisungsfähigkeit besitzt;
wobei der Gassensor **gekennzeichnet ist durch**:
ein im Vergleich zu dem Dichtungselement (13) weniger leicht zu verformendes rohrförmiges Element (134) zwischen der Innenfläche des Durchgangslochs (132) und dem Filter (133),
wobei das Filter (133) an dem rohrförmigen Element (134) derart befestigt ist, dass kein Wasser in einen Raum zwischen der Außenumfangsfläche des Filters (133) und der Innenumfangsfläche des rohrförmigen Elements (134) gelangt, und
einen Separator (12), der mit einer kreuzförmigen Nut (12a) an einer Rückfläche des Separators (12) und mit Einführlöchern (121), die mit der kreuzförmigen Nut (12a) kommunizieren, ausgestattet ist, wobei die Einführlöcher von dem vorderen Ende zu einem rückwärtigen Ende des Separators (12) durchgehen,
wobei der Separator im Inneren des Gehäuses (11) positioniert ist und eine vordere Stirnfläche (133a) des Filters (133) sowie eine vordere Stirnfläche (13a) des Dichtungselements (13) berührt, damit das Filter (133) und das rohrförmige Element (134) in dem Dichtungselement (13) fixiert werden können, und
wobei der Separator (12) **durch** das Filter (133) eingeleitete Luft **durch** die kreuzförmige Nut (12a) hindurch gelangen lässt, um zu den Einführlöchern (121) geleitet zu werden.

2. Gassensor nach Anspruch 1, bei dem das rohrförmige Element (134) das Filter (133) in dessen säulenförmiger Form hält.

3. Gassensor nach Anspruch 1 oder 2, bei dem das Filter (133) in dem rohrförmigen Element (134) durch Presssitz angeordnet ist.

4. Gassensor nach einem der Ansprüche 1 bis 3, bei dem zumindest ein Teil des Filters in dem rohrförmigen Element (134) mit einer dazwischen befindlichen Klebstoffschicht (150) angeordnet ist.

5. Gassensor nach einem der Ansprüche 1 bis 4, bei dem zumindest ein Teil des Filters (133) durch Krimpen mit dem rohrförmigen Element (134) verbunden ist.

6. Gassensor nach einem der Ansprüche 1 bis 5, bei dem das rohrförmige Element (134) ein Metallbecher mit einem Bodenteil (136) am hinteren Ende und mit einer Belüftungsöffnung (138) in dem Bodenteil (136) ist.

7. Gassensor nach einem der Ansprüche 1 bis 6, weiterhin umfassend:
Leitungsdrähte (190, 200, 210, 220), die in das Dichtungselement (13) eingeführt sind;
Anschlussleitungen (14) zum elektrischen Verbinden des Sensorelements (22) und der Leitungsdrähte (190, 200, 210, 220); und
wobei der Separator (12) die Anschlussleitungen (14) in sich derart aufnimmt, dass die Anschlussleitungen (14) voreinander isoliert sind.

8. Gassensor nach Anspruch 7, bei dem die vordere Stirnfläche des Filters (133) aus dem vorderen Ende des rohrförmigen Elements (134) vorsteht.

9. Gassensor nach Anspruch 7 oder 8, bei dem das Sensorende des Separators (12), das in Beruhrung mit der vorderen Stirnfläche (133a) des Filters (133) steht, einen konvexen Abschnitt (12b) besitzt.

## Revendications

1. Capteur de gaz, comprenant :
un élément de capteur (2) s'étendant dans une direction axiale du capteur de gaz afin de détecter un gaz devant être mesuré ;
une enceinte (11) entourant l'élément de capteur (22) et comportant une partie d'extrémité avant (112), à partir de laquelle une partie avant de l'élément de capteur (22) fait saillie de façon à être exposée au gaz devant être mesuré ;
un élément d'étanchéité (13) disposé de façon fixe dans une partie arrière (113) de l'enceinte (11), l'élément d'étanchéité (13) comportant un trou traversant (132) pénétrant à travers l'élément d'étanchéité (13) dans la direction axiale ; et
un filtre en forme de colonne (133) inséré dans le trou traversant (13), qui présente une perméabilité à l'air et une hydrophobie ;
le capteur de gaz étant **caractérisé en ce qu'**il comprend :
un élément tubulaire (134) qui est moins susceptible de se déformer que l'élément d'étanchéité (13), disposé entre la surface intérieure du trou traversant (132) et le filtre (133),
le filtre (133) étant fixé à l'élément tubulaire (134) de telle sorte qu'aucune eau ne permée dans un espace entre la surface circonférentielle extérieure du filtre (133) et la surface circonférentielle intérieure de l'élément tubulaire (134), et
un séparateur (12), comportant une gorge en forme de croix (12a) sur une surface d'extrémité arrière du séparateur (12) et de trous d'insertion (121) communiquant avec la gorge en forme de croix (12a), les trous d'insertion traversant d'une extrémité avant à une extrémité arrière du séparateur (12),
le séparateur étant positionné à l'intérieur de l'enceinte (11) et venant en contact avec une surface d'extrémité avant (133a) du filtre (133) et une surface d'extrémité avant (13a) de l'élément d'étanchéité (13) de façon à permettre au filtre (133) et à l'élément tubulaire (134) d'être fixés dans l'élément d'étanchéité (13), et
le séparateur (12) permettant à de l'air introduit à travers le filtre (133) de traverser la gorge en forme de croix (12a) de façon à être amené vers les trous d'insertion (121).

2. Capteur de gaz selon la revendication 1, dans lequel :
l'élément tubulaire (134) maintient le filtre (133) dans sa forme de colonne.

3. Capteur de gaz selon la revendication 1 ou 2, dans lequel :
le filtre (133) est disposé par adaptation par pression dans l'élément tubulaire (134).

4. Capteur de gaz selon l'une quelconque des revendications 1 à 3, dans lequel :
au moins une partie du filtre est disposée dans l'élément tubulaire (134) avec une couche adhésive (150) entre eux.

5. Capteur de gaz selon l'une quelconque des revendications 1 à 4, dans lequel :
au moins une partie du filtre (133) est fixée par sertissage avec l'élément tubulaire (134).

6. Capteur de gaz selon l'une quelconque des revendications 1 à 5, dans lequel :
l'élément tubulaire (134) est une coupelle métallique comprenant une partie inférieure (136) sur l'extrémité arrière et une évacuation d'air (138) dans la partie inférieure (136).

7. Capteur de gaz selon l'une quelconque des revendications 1 à 6, comprenant de plus :
des fils conducteurs (190, 200, 210, 220) insérés dans l'élément d'étanchéité (13) ;
des conducteurs de borne (14) pour connecter électriquement l'élément de capteur (22) et les fils conducteurs (190, 200, 210, 220), respectivement ; et
le séparateur (12) maintenant les conducteurs de borne (14) à l'intérieur de celui-ci de telle sorte que les conducteurs de borne (14) soient isolés les uns vis-à-vis des autres.

8. Capteur de gaz selon la revendication 7, dans lequel la face d'extrémité avant du filtre (133) fait saillie à partir de l'extrémité avant de l'élément tubulaire (134).

9. Capteur de gaz selon la revendication 7 ou 8, dans lequel l'extrémité arrière du séparateur (12) qui est en contact avec la surface d'extrémité avant (133a) du filtre (133) comporte une partie convexe (12b).
